# EUROPÄISCHE PATENTSCHRIFT

(11) **EP 2 517 282 B1**
(45) Veröffentlichungstag und Bekanntmachung des Hinweises auf die Patenterteilung: **20.12.2017**
(21) Anmeldenummer: 10800752.7
(22) Anmeldetag: 23.12.2010
(51) Int. Cl.: H01M 2/10, B60L 11/18, H01M 2/20, H01M 10/61, H01M 10/625, H01M 10/647, H01M 10/6557

(54) **AKKUMULATOR MIT SPANNUNGSERZEUGENDEN ZELLEN UND EINEM DAZWISCHEN ANGEORDNETEN I-FÖRMIGEN BEZIEHUNGSWEISE H-FÖRMIGEN ZWISCHENELEMENT**
BATTERY WITH VOLTAGE GENERATING CELLS AND A I-SHAPED OR H-SHAPED ELEMENT ARRANGED IN BETWEEN
BATTERIE DE CELLULES À PRODUCTION DE VOLTAGE ET UN ÉLÉMENT EN FORME DE I QU DE H INTERPOSÉ

(30) Priorität: 23.12.2009 US 289894 P; 18.06.2010 US 356239 P; 18.06.2010 US 356071 P
(43) Veröffentlichungstag der Anmeldung: 31.10.2012
(73) Patentinhaber: Samsung SDI Co., Ltd., Yongin-si, Gyeonggi-do (KR)
(72) Erfinder: MICHELITSCH, Martin, A-8160 Weiz (AT); RÖPKE, Stefan, A-8041 Graz (AT); PUCHER, Matthias, A-8052 Graz (AT); UNTERBERGER, Rainer, A-8041 Graz (AT)
(74) Vertreter: Gulde & Partner
(86) Internationale Anmeldenummer: PCT/EP2010/070700
(87) Internationale Veröffentlichungsnummer: WO 2011/076940

(56) Entgegenhaltungen:
- DE-A1- 10 002 142
- DE-A1- 10 223 782
- DE-A1-102007 049 358
- DE-A1-102008 014 155
- JP-A- 2006 310 153
- US-A1- 2006 115 719

## Beschreibung

### TECHNISCHES GEBIET

Die Erfindung betrifft einen Akkumulator, umfassend mehrere, insbesondere einander benachbart angeordnete, spannungserzeugende Zellen sowie mehrere voneinander beabstandete Befestigungs-/Auflagepunkte, an welchen der Akkumulator befestigt ist oder aufliegt, wobei zumindest ein erster Teil der genannten Zellen mit einer ersten Masse sowie optionale weitere Bestandteile des Akkumulators mit einer weiteren Masse zwischen den Befestigungs-/Auflagepunkten zu liegen kommen.

### STAND DER TECHNIK

### Akkumulatoren werden in aller Regel aus mehreren

spannungserzeugenden Zellen aufgebaut, um eine geforderte Spannung, einen geforderten Strom und/oder eine geforderte Kapazität liefern zu können. Insbesondere bei vergleichsweise leistungsfähigen Akkumulatoren, wie sie häufig für Elektrokraftfahrzeuge eingesetzt werden, werden häufig einige hundert Zellen miteinander verschaltet. Die Zellen sind in Summe entsprechend schwer und werden insbesondere in einem Automobil mitunter heftigen Beschleunigungen ausgesetzt, beispielsweise beim Bremsen oder beim Überfahren von Fahrbahnunebenheiten. Um die Zellen in jedem Fahrzustand in Position zu halten, sind zum Teil recht massive Haltevorrichtungen aus dem Stand der Technik bekannt. Nachteilig ist daran, dass diese Haltevorrichtungen das Gewicht des Akkumulators und somit des Fahrzeugs beträchtlich erhöhen. Wie leicht einsehbar ist, werden die Fahrleistungen des Automobils damit geschmälert.

Die DE 10002142 beschreibt eine Stromquelle, welche eine Vielzahl von parallel orientierten Stromversorgungsmodulen in einem Haltergehäuse enthält. Das Haltergehäuse ist mit Deckgehäusen auf beiden Seiten und mit zwischen denselben angeordneten Zwischengehäusen versehen. Halterippen stehen von den Innenseiten der Deckgehäuse und von beiden Seiten der Zwischengehäuse vor, um Stromversorgungsmodule in einer Vielzahl von Reihen anzuordnen und sie in festen Positionen zu halten. Die Deckgehäuse auf beiden Seiten und die Zwischengehäuse sind miteinander verbunden, um die Vielzahl von Reihen von Stromversorgungsmodulen zwischen sich aufzunehmen und mittels Halterippen in festen Positionen zu halten.

Aus der US 2006/0115719 A1 ist ein Batteriemodul bekannt, welches plattenförmige Zwischenelemente aufweist und die Zellen über Spannstangen verspannt sind.

Die DE 102008014155 betrifft ein modulares Batteriesystem mit zumindest zwei Batteriemodulen, wobei jedes Batteriemodul einen zumindest teilweise von einem Kühlmittel durchströmten Kühlkörper und eine Batteriezelle aufweist, wobei die Batteriezelle derartan dem Kühlkörper angeordnet ist, dass sich ein wärmeleitender Kontakt zwischen der Batteriezelle und dem Kühlkörper einstellt und eine Kühlmittelversorgung mit einem Kühlmittelleiter zur Verteilung des Kühlmittels an die Kühlkörper oder zum Ableiten des Kühlmittels von den Kühlkörpern vorgesehen ist, wobei der Kühlmittelleiter Kühlmittelleitermodule aufweist, die miteinander verbindbar sind und zumindest teilweise den Kühlmittelleiter bilden, und wobei zur Anpassung der Strömungslänge des Kühlmittels in der Kühlmittelversorgung in dem Kühlmittelleiter eine Umlenkeinrichtung zur Umkehrung der Strömungsrichtung des Kühlmittels in dem Kühlmittelleiter vorgesehen ist und der Kühlmittelleiter zumindest in einem Längsabschnitt zwei Strömungskanäle aufweist, in welchen das Kühlmittel im Wesentlichen in entgegengesetzten Richtungen führbar ist.

Aus der DE 10223782 A1 schließlich ist eine Batterie bekannt, welche wenigstens eine elektrochemische Speicherzelle und eine Kühleinrichtung hat, wobei die wenigstens eine elektrochemische Speicherzelle zwischen Teilen der Kühleinrichtung angeordnet ist. Die Kühleinrichtung ist von einem flüssigen Kühlmedium durchströmt und jede der elektrochemischen Speicherzellen ist in einer Öffnung der Kühleinrichtung aufgenommen und steht mit jeweils wenigstens einer in einer Richtung senkrecht zu einer Längsachse der elektrochemischen Speicherzelle gekrümmten Außenfläche zumindest teilweise in kraftschlüssigem Kontakt mit der Kühleinrichtung. Die Kühleinrichtung weist in den Bereichen des kraftschlüssigen Kontakts wenigstens eine Dehnfuge auf.

### OFFENBARUNG DER ERFINDUNG

Aufgabe der Erfindung ist es daher, einen verbesserten Akkumulator anzugeben, insbesondere einen, der ein reduziertes Gewicht aufweist.

Die Erfindung wird durch einen Akkumulator der eingangs genannten Art gelöst, bei dem der erste Teil der Zellen die gesamte zwischen den Befestigungs-/Auflagepunkten im Akkumulator entstehenden Biege-/Scherbeanspruchung aufnimmt und zumindest zwischen zwei spannungserzeugenden Zellen zur elektrischen Verbindung der Zellen sowie zur Kraftübertragung von einer Zelle zur nächsten Zelle und damit die Zellen zueinander in Position bleiben ein I-förmiges beziehungsweise H-förmiges Zwischenelement (14) angeordnet ist.

Erfindungsgemäß wird also die mechanische Struktur der Zellen genutzt, um eine im Akkumulator entstehende Biegebelastung aufzunehmen. Häufig besitzen die Zellen einen relativ massiven Metallmantel. Beispielweise befindet sich bei sogenannten "Metal-Can"-Zellen die gerollte Zell-Chemie in einer Metallhülle, die äußerst stabil ist und damit das Innenleben der Zelle schützt. Erfindungsgemäß wird nun die gesamte in einem Akkumulator entstehenden Biege-/Scherbeanspruchung über diese Zellwände geleitet.

Bei dieser Variante der Erfindung wird die gesamte auftretende Belastung von den Zellen selbst aufgenommen. Zusätzliche Tragelemente können somit entfallen.

Zur optimalen Kraftübertragung von einer Zelle zur nächsten und auch damit die Zellen zueinander in Position bleiben wird zwischen diesen ein I-förmiges beziehungsweise H-förmiges Zwischenelement angeordnet. Eine Tragestruktur zur Aufnahme der Zellen - sofern eine solche überhaupt notwendig ist - kann daher entsprechend fragiler gestaltet werden. Vorteilhaft kann auf diese Weise das Gewicht des Akkumulators und somit des Fahrzeugs beträchtlich reduziert werden. Unmittelbar damit einhergehend werden die Fahrleistungen des Automobils verbessert.

Im Rahmen der Erfindung bedeuten "einander benachbarte Zellen" Zellen, zwischen denen kein oder nur ein geringer Abstand gegeben ist. Die Zellen können einander berühren, müssen dies aber nicht zwingend tun. Denkbar ist auch, dass zwischen den Zellen weitere Bauteile angeordnet sind, welche den Zwischenraum zwischen zwei Zellen zum Teil oder komplett ausfüllen.

Vorteilhafte Ausgestaltungen und Weiterbildungen der Erfindung ergeben sich nun aus den Unteransprüchen, sowie aus der Beschreibung in Zusammenschau mit den Figuren.

Günstig ist es, wenn der erste Teil der Zellen zum Aufnehmen der Biege-/Scherbeanspruchung, welche aus der auf die erste Masse und die optionale weitere Masse wirkende Beschleunigung in vertikaler Richtung herrührt, vorgesehen ist. Häufig wird ein Akkumulator im Wesentlichen in horizontaler Lage eingebaut/gebraucht, wobei der Akkumulator an zumindest zwei Punkten aufliegt. Aufgrund der auf Masse der Zellen und auf die Masse weiterer optionaler Bauteile wirkenden Erdbeschleunigung, ergibt sich zwischen den Auflagepunkten eine Biege-/Scherbeanspruchung im Akkumulator, welche erfindungsgemäß durch die Zellen selbst aufgenommen wird. Ist der Akkumulator in einem Automobil eingebaut und befährt dieses eine Fahrbahn mit Fahrbahnunebenheiten, so kann selbstverständlich auch ein Vielfaches der Erdbeschleunigung auf die genannten Massen einwirken und die Biege-/Scherbeanspruchung entsprechend erhöhen.

Günstig ist es weiterhin, wenn der erste Teil der Zellen zum Aufnehmen der Biege-/Scherbeanspruchung, welche aus der auf die erste Masse und die optionale weitere Masse wirkende Beschleunigung in horizontaler Richtung herrührt, vorgesehen ist. Wird der Akkumulator im Wesentlichen in vertikaler Lage eingebaut/verwendet und sind die Auflage-/Befestigungspunkte vertikal beabstandet, dann führt eine horizontale Beschleunigung (etwa beim Bremsen des Fahrzeugs oder bei Kurvenfahrten) zu einer Biege-/Scherbeanspruchung, analog zur vertikalen Beschleunigung. Selbstverständlich können auch kombinierte Kräfte auftreten, beispielweise, wenn die Auflage-/Befestigungspunkte sowohl horizontal als auch vertikal beabstandet sind.

An dieser Stelle wird angemerkt, dass die im Akkumulator vorliegende Beanspruchung auch mit Hilfe einer Vergleichsspannung angegeben werden kann. Die Vergleichsspannung ist ein Begriff aus der Festigkeitslehre und bezeichnet eine fiktive einachsige Spannung, die dieselbe Materialbeanspruchung darstellt wie ein realer, mehrachsiger Spannungszustand.

Vorteilhaft ist es zudem, wenn zumindest zwischen zwei spannungserzeugenden Zellen ein plattenförmiges Zwischenelement angeordnet ist, welches zumindest auf einer Seite elastische Rippen aufweist. Auf diese Weise kann ein Längenausgleich zwischen den Zellen erfolgen, indem die Rippen mehr oder weniger verformt werden. Vorzugsweise ist das plattenförmige Zwischenelement in dem Bereich der Zellen angeordnet, welcher frei von dem I-förmigen beziehungsweise H-förmigen Zwischenelement ist, sodass die Kraftübertragung zwischen den Zellen vorwiegend über die genannten I-förmigen beziehungsweise H-förmigen Zwischenelemente erfolgt. Alternativ kann das plattenförmige Zwischenelement auch auf dem I-förmigen beziehungsweise H-förmigen Zwischenelement aufliegen, insbesondere auf den Seitenflanken desselben.

Besonders vorteilhaft ist es, wenn die Rippen an einer Zelle anliegen und eine Rille zwischen zwei Rippen gemeinsam mit der Zelle einen Kanal begrenzt, welcher zur Führung eines gasförmigen oder flüssigen Wärmeträgers vorgesehen ist. Bei dieser Variante der Erfindung erfüllen die Rippen somit einen Doppelnutzen, indem sie einerseits einen Längenausgleich zwischen den Zellen ermöglichen, andererseits gemeinsam mit den Zellen aber auch Kanäle bilden, durch die ein Wärmeträger strömen kann. Durch den erwähnten Doppelnutzen kann die Anzahl der für einen Akkumulator benötigten Bauteile merklich reduziert werden.

Günstig ist es, wenn zumindest zwei spannungserzeugende Zellen und zumindest ein Zwischenelement miteinander verklebt sind. Bei dieser Variante der Erfindung bilden miteinander verklebte Zellen einen Verbund, über den Biege-/Scherkräfte geleitet werden können. Vorteilhaft werden für die Verbindung der Zellen keine weiteren Bauteile benötigt.

Günstig ist es weiterhin, wenn zumindest zwei spannungserzeugende Zellen und zumindest ein Zwischenelement miteinander verschraubt sind. Auf diese Weise können die Zellen auch wieder voneinander gelöst werden, was insbesondere bei der Reparatur oder Entsorgung eines Akkumulators Vorteile bietet.

Günstig ist es darüber hinaus, wenn zumindest zwei spannungserzeugende Zellen und zumindest ein Zwischenelement mit Hilfe von Zugbändern oder Zugstangen, welche eine Druckvorspannung erzeugen, aneinander gedrückt werden. Auf diese Weise wird eine Druckvorspannung erzeugt, die ein Auseinanderklaffen des Spalts zwischen zwei Zellen in dem Bereich, in dem das Biegemoment eine Zugspannung verursacht, verhindert. Das heißt, die durch die Spann-/Zugbänder erzeugte Druckvorspannung ist in diesem Bereich größer als die durch die Biegebeanspruchung hervorgerufene Zugspannung. Anstelle von Spann-/Zugbändern können auch Zugstangen vorgesehen sein, z.B. Stiftschrauben, welche die Zellen über Platten aneinander drücken. Selbstverständlich können diese Maßnahmen auch zusätzlich zu einer Verklebung vorgesehen werden.

Besonders vorteilhaft ist es schließlich auch, wenn das Tragelement hohl ist und zur Führung eines gasförmigen oder flüssigen Wärmeträgers vorgesehen ist. Bei dieser Variante der Erfindung erfüllt das Tragelement also einen Doppelnutzen, indem es einerseits Biege-/Scherkräfte aufnimmt, andererseits auch zur Temperierung des Akkumulators beziehungsweise dessen Zellen beiträgt. Durch den erwähnten Doppelnutzen kann die Anzahl der für einen Akkumulator benötigten Bauteile merklich reduziert werden.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: ein erstes Beispiel eines Akkumulators, bei dem die Zellen miteinander verklebt sind;
- Figur 2: ein zweites Beispiel eines erfindungsgemäßen Akkumulators, bei dem die Zellen mit Hilfe von Zug-/Spannbändern gegeneinander vorgespannt werden;
- Figur 3: ein drittes Beispiel eines erfindungsgemäßen Akkumulators, bei dem die Zellen miteinander verschraubt sind;
- Figur 4: eine Zelle mit daran befestigten Haltevorrichtungen;
- Figur 5: Zellen wie in Figur 4 dargestellt, welche über Verbindungselemente miteinander verbunden werden und so einen Akkumulator bilden in Schrägansicht;
- Figur 6: den Akkumulator aus Fig. 5 in Seitenansicht;
- Figur 7: verschiedene Formen von Akkumulatoren, welche aus Zellen wie in Fig. 4 dargestellt gebildet werden;
- Figur 8: ein schalenförmiges Zwischenelement, welches zur Anordnung zwischen Zellen vorgesehen ist;
- Figur 9: einen Ausschnitt eines Akkumulators, welcher mit Hilfe von Zwischenelementen wie in Fig. 8 dargestellt aufgebaut ist;
- Figur: 10 den Akkumulator aus Fig. 9 mit einer zusätzlichen Kühlplatte und einer zusätzlichen Deckplatte in Seitenansicht;
- Figur 11: den Akkumulator aus Fig. 10 in Explosionsdarstellung;
- Figur 12: den fertig montierten Akkumulator aus Fig. 11 in Schrägansicht;
- Figur 13: einen Akkumulator mit einem zwischen mehreren Zellen angeordneten Tragelement;
- Figur 14: eine Detailansicht des in Fig. 13 dargestellten Akkumulators;
- Figur 15: den Akkumulator aus Fig. 14, welcher in ein Fahrzeug eingebaut ist und mit Abdeckplatten vor Umwelteinflüssen geschützt wird;
- Figur 16: einen Akkumulator mit einem Tragelement, welches schalenförmige Vertiefungen aufweist, in Explosionsdarstellung;
- Figur 17: den fertig montierten Akkumulator aus Fig. 16 in Schrägansicht;
- Figur 18: den fertig montierten Akkumulator aus Fig. 16 in Seitenansicht;
- Figur 19: den Akkumulator aus Fig. 17 mit einer zusätzlichen elektronischen Schaltung;
- Figur 20: einen Akkumulator mit plattenförmigen Zwischenelementen, welche elastische Rippen aufweisen, im Schrägschnitt;
- Figur 21: den Akkumulator aus Fig. 20 in Draufsicht;
- Figur 22: eine Platte mit elastischen Rippen in Detailansicht;
- Figur 23: den Akkumulator aus Fig. 21 mit einer zusätzlichen oberen und unteren Abdeckung in Seitenansicht;
- Figur 24: eine Detailansicht des Akkumulators aus Fig. 23 und
- Figur 25: einen Akkumulator mit einem hohlen Tragelement, das zur Führung eines Wärmeträgers vorgesehen ist;

### DETAILIERTE BESCHREIBUNG DER ERFINDUNG

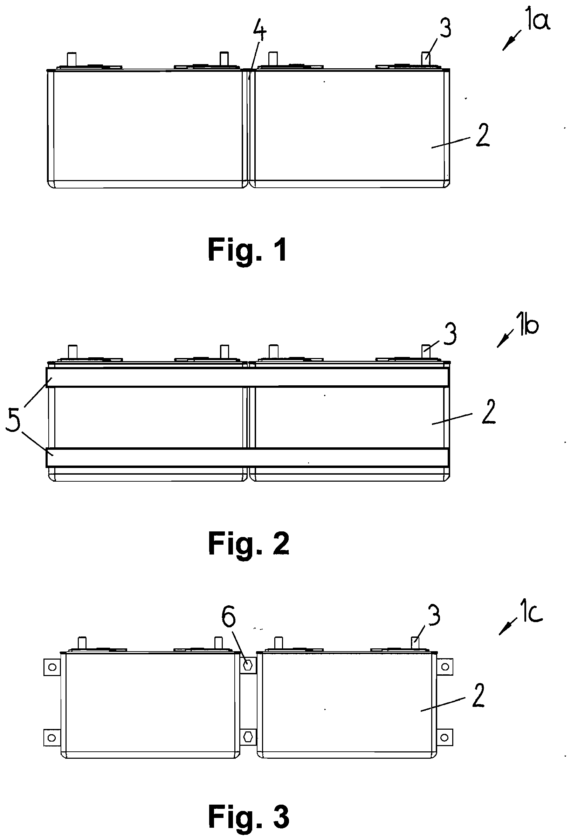

Fig. 1 zeigt ein erstes Beispiel eines Akkumulators 1a in Seitenansicht. Dieser umfasst mehrere spannungserzeugende Zellen 2 mit jeweils zwei Anschlusskontakten 3. Im gezeigten Beispiel sind die Zellen 2 an deren Schmalseite mit Hilfe einer Klebeschicht 4 miteinander verklebt, so dass der Akkumulator 1a auch ohne weitere Bauteile eine in sich geschlossene Einheit bildet. Die Zellen 2, insbesondere deren Gehäuse (häufig aus Metall bestehend) sowie die Verklebung sind so ausgelegt, dass sich der Akkumulator 1a "selbst trägt". Dies bedeutet, dass die Zellen 2 die durch ihre Masse und die Erdbeschleunigung resultierende Biege-/Scherbeanspruchung aufnehmen, wenn der Akkumulator 1a an voneinander beabstandeten Befestigungs-/Auflagepunkten gehalten wird, in der Fig. 1 beispielsweise links und rechts.

Fig. 2 zeigt eine alternative Ausführungsform eines erfindungsgemäßen Akkumulators 1b, welche dem in Fig. 1 dargestellten Akkumulator 1a sehr ähnlich ist. Anstelle einer Verklebung werden die Zellen 2 jedoch durch zwei Spann-/Zugbänder 5 aneinander gedrückt. Auf diese Weise wird eine Druckvorspannung erzeugt, die ein Auseinanderklaffen des Spalts zwischen den Zellen 2 in dessen unteren Bereich verhindern. Das heißt, die durch die Spann-/Zugbänder 5 erzeugte Druckvorspannung ist in diesem Bereich größer als die durch die Biegebeanspruchung hervorgerufene Zugspannung. Anstelle von Spann-/Zugbändern 5 können auch Zugstangen vorgesehen sein, z.B. Stiftschrauben, welche die Zellen 2 über Platten aneinander drücken. Selbstverständlich können diese Maßnahmen zusätzlich zu einer Verklebung vorgesehen werden.

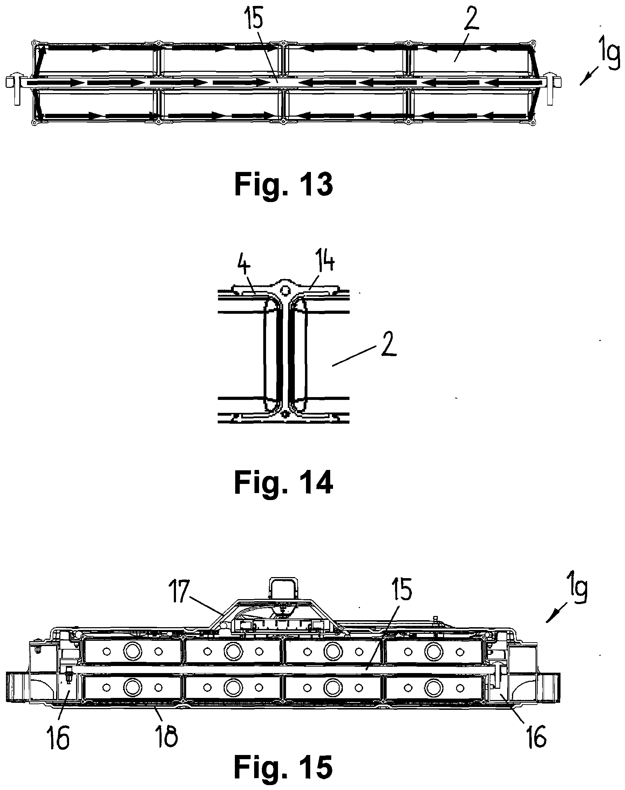

Fig. 3 zeigt eine alternative Ausführungsform eines erfindungsgemäßen Akkumulators 1c, welche dem in Fig. 1 dargestellten Akkumulator 1a ebenfalls sehr ähnlich ist. Anstelle einer Verklebung werden die Zellen 2 nun aber mit Hilfe von Schrauben 6 miteinander verschraubt. Zu diesem Zweck können Laschen an die Zellen 2 geklebt oder geschweißt sein. In den Figuren 1 bis 3 können auch I-förmige oder H-förmige Zwischenelemente, so wie dies beispielsweise in der Fig. 14 dargestellt ist, angeordnet werden.

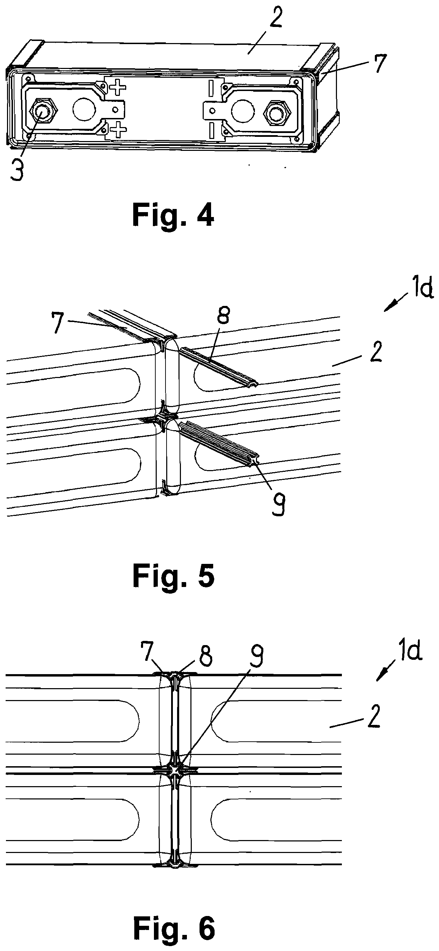

Die Figuren 4 bis 6 zeigen eine weitere Ausführungsform eines erfindungsgemäßen Akkumulators 1d, beziehungsweise einen Ausschnitt davon. Bei dieser Variante werden am Gehäuse der Zellen 2 Befestigungselemente 7 vorgesehen. Diese können auf das genannte Gehäuse aufgeklebt oder aufgeschweißt sein, z.B. in Form von Halte- bzw. Befestigungswinkeln. Zum Verbinden mehrerer Zellen 2 werden L-förmige Zwischen- oder Verbindungselemente 8 beziehungsweise kreuzförmige Zwischen- oder Verbindungselemente 9 mit den Befestigungselementen 7 verbunden, sodass ein selbsttragender Zellverbund entsteht. Dazu kann ein Befestigungselement 7 Einbuchtungen/Fortsätze aufweisen in die Fortsätze/Einbuchtungen der Verbindungselemente 8, 9 eingreifen. Beispielsweise kann so eine Nut/Feder-Verbindung, eine Stift/Loch-Verbindung oder auch eine Schwalbenschwanzverbindung zwischen den Verbindungselementen 8, 9 und den Befestigungselementen 7 realisiert werden. Zur Isolation der Zellen 2 untereinander können die Verbindungselemente 9 darüber hinaus aus einem Isolator bestehen, beispielsweise aus Kunststoff oder Keramik. Denkbar ist auch, dass die Einbuchtungen/Fortsätze direkt in das Gehäuse der Zellen 2 eingearbeitet sind und Befestigungselemente 7 somit entfallen können. Vier L-förmige Zwischen- oder Verbindungselemente 8 beziehungsweise zwei kreuzförmige Zwischen- oder Verbindungselemente 9 können überdies zu einem I-förmigen oder H-förmigen Zwischenelement (siehe auch Fig. 14) kombiniert werden.

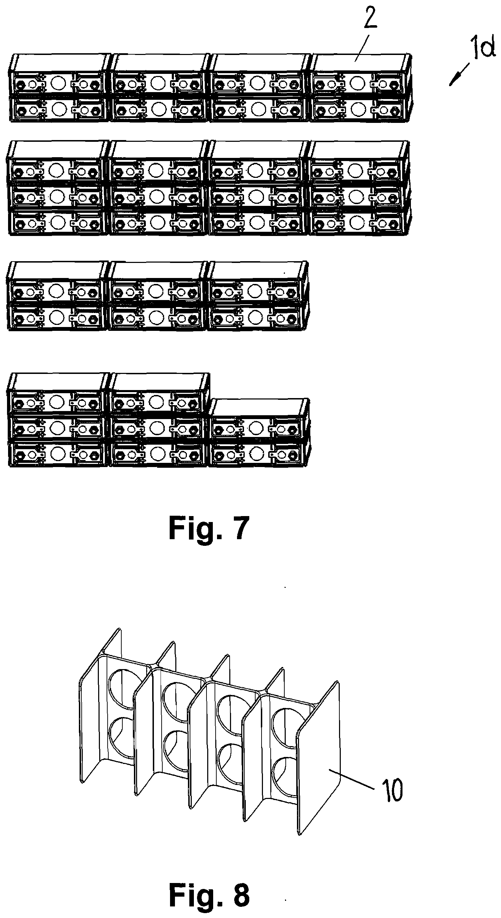

Der Akkumulator 1d kann dabei auf beliebige Weise modular zusammengestellt werden. Beispielsweise zeigt die Fig. 7 dazu verschiedene Ausführungsformen, konkret einen 4x2-Verbund, einen 4x3-Verbund, einen 3x2-Verbund sowie einen stufenförmigen Verbund. Selbstverständlich sind die dargestellten Varianten nicht bloß für eine Verbindungsmethode entsprechend der Figuren 4 bis 6 geeignet, sondern es können natürlich auch andere Verbindungsmethoden zur Herstellung solcher Akkumulatoren angewendet werden (beispielsweise die in den Figuren 1 bis 3 dargestellten Methoden).

Die Figuren 8 bis 9 zeigen eine weitere Variante eines erfindungsgemäßen Akkumulators 1e, bei dem mehrere Zellen mit Hilfe von schalenförmigen Zwischenelementen 10 miteinander verbunden werden. Diese schalenförmigen Zwischenelemente 10 können auch als Aneinanderreihung von I-förmigen oder H-förmigen Zwischenelementen (siehe auch Fig. 14) aufgefasst werden. An den Befestigungs-/Auflagepunkten sind Endelemente 11 vorgesehen, welche die Montage des Akkumulators 1e in zum Beispiel einem Fahrzeug erlauben. Zur Erzielung eines selbsttragenden Verbunds werden die Zellen 2 mit den Zwischenelementen 10 und den Endelementen 11 beispielsweise verklebt.

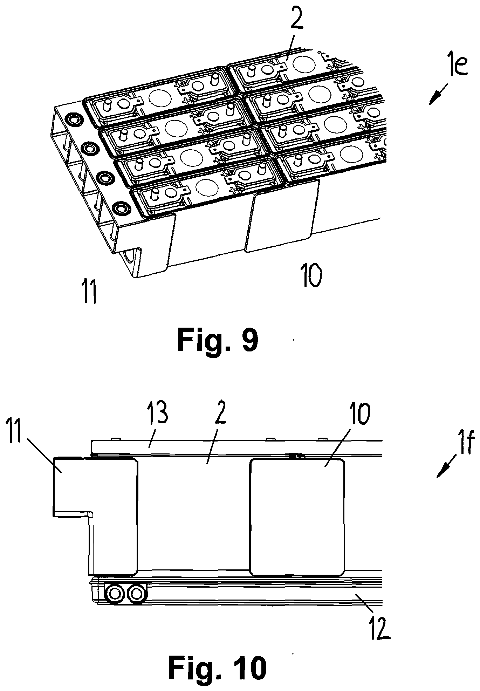

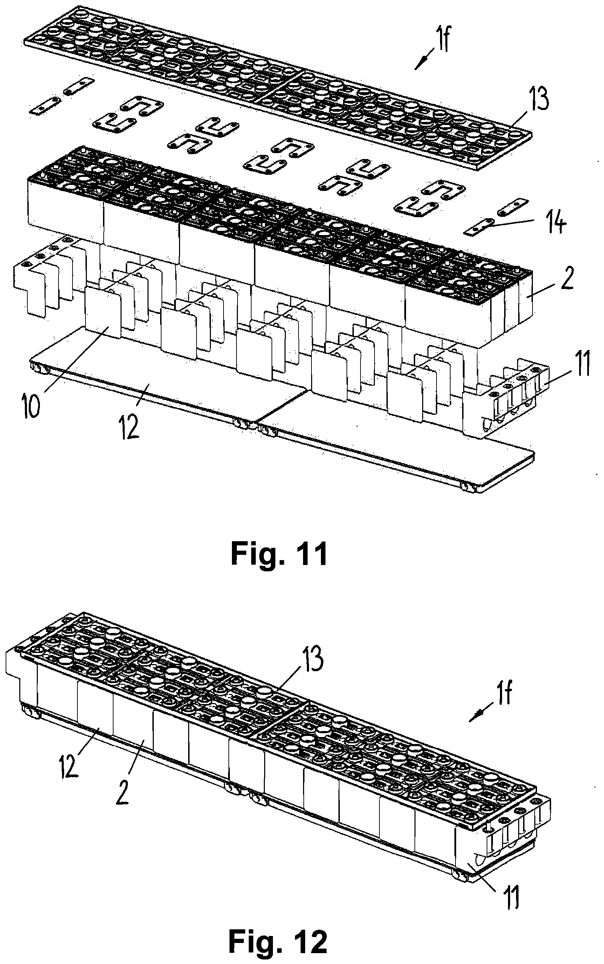

Die Figuren 10 bis 12 zeigen eine Abwandlung des in den Figuren 8 bis 9 dargestellten Akkumulators 1e in Form eines Akkumulators 1f, welcher zusätzlich zwei Kühlplatten 12 zur Führung eines gasförmigen oder flüssigen Wärmeträgers und eine Deckplatte 13 aufweist. Zusätzlich sind auch Zellverbinder 14 dargestellt, welche die elektrische Verbindung der Zellen 2 übernehmen (Anmerkung: in den vorangegangenen Figuren wurden Zellverbinder der einfacheren Darstellung halber weggelassen). Fig. 10 zeigt den Akkumulator 1f in Seitenansicht, Fig. 11 in Explosionsdarstellung und Fig. 12 in Schrägansicht.

Die Figuren 13 bis 15 zeigen eine weitere Variante eines erfindungsgemäßen Akkumulators 1g, bei dem zwischen den Zellen I-förmige beziehungsweise H-förmige Zwischenelemente 14 angeordnet sind, über welche die Zellen 2 mit Hilfe von Klebeschichten 4 miteinander verbunden sind. Zusätzlich umfasst der Akkumulator 1g ein Tragelement 15, beispielsweise ein Aluminiumprofil. Zur optimalen Kraftübertragung sind die Zellen 2 auch mit dem Tragelement 15 verklebt, sodass sich insgesamt eine sehr tragfähige Struktur ergibt, da sowohl die Zellen°2 als auch das Tragelement 15 Kräfte aufnehmen können.

Fig. 13 zeigt den Akkumulator 1g zusätzlich mit Pfeilen, welche den Kraftfluss symbolisieren sollen. Dabei ist zu beachten, dass dies nicht implizieren soll, dass in dem Bauteil nur Druckspannungen herrschen.

Selbstverständlich herrschen im unteren Bereich des Akkumulators 1g Zugspannungen, wenn dieser nach unten gebogen wird, bzw. links und rechts horizontal gelagert wird. Fig. 14 zeigt eine Detailansicht einer Verklebung von zwei Zellen 2, und Fig. 15 zeigt schließlich den an zwei Längsträgern 16 eines Fahrzeugs befestigten (z.B. angeschraubten) Akkumulator 1g. Dieser ist mit einer oberen Abdeckung 17 und mit einer unteren Abdeckung 18 zusätzlich vor Umwelteinflüssen geschützt.

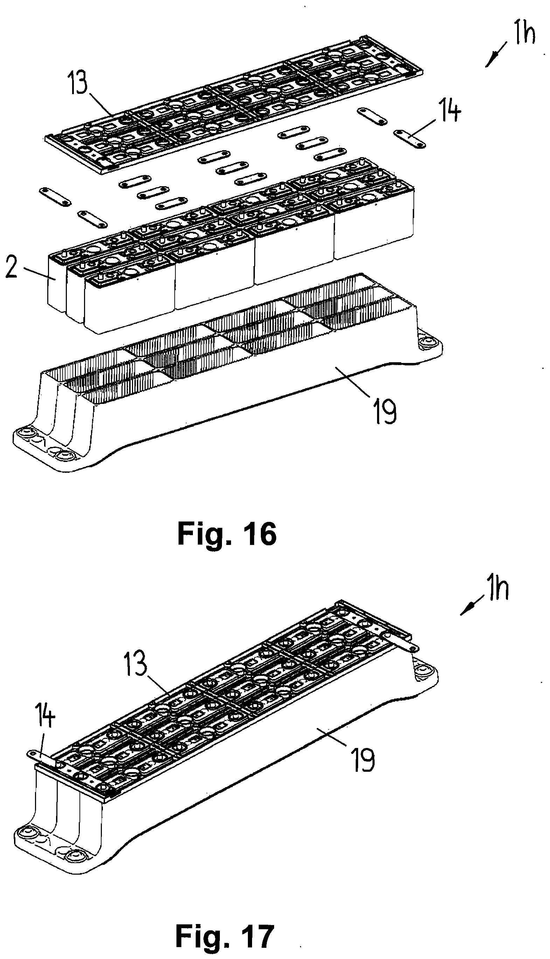

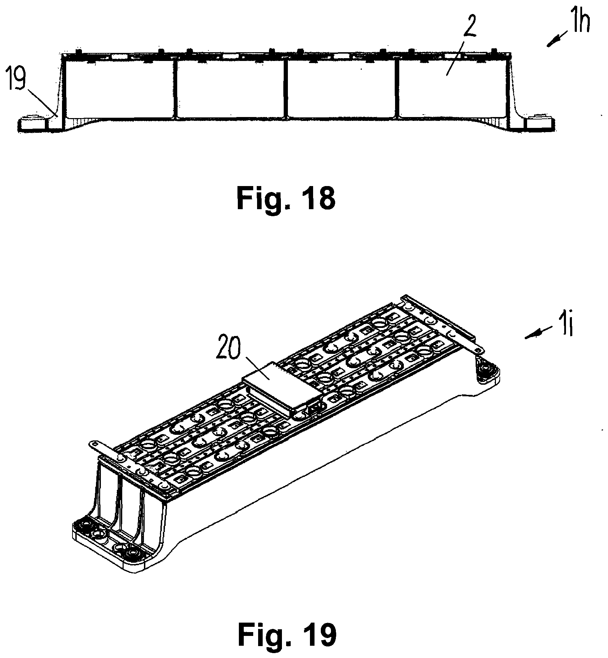

Die Figuren 16 bis 18 zeigen eine weitere Variante eines erfindungsgemäßen Akkumulators 1h, welcher den in den Figuren 9 bis 12 dargestellten Akkumulatoren 1e und 1f recht ähnlich ist. Im Unterschied dazu umfasst der Akkumulator 1h aber ein Tragelement 19 welches Ausnehmungen beziehungsweise schalenförmige Vertiefungen zur Aufnahme der Zellen 2 umfasst. Wegen der ohnehin vorhandenen I-förmigen oder H-förmigen Zwischenelemente 14 können die Stege der gezeigten Schalen auch teilweise entfallen, beispielsweise die Querstege des Tragelements 19. Das Tragelement 19 kann daher beispielsweise aus relativ weichem Kunststoff bestehen. Insbesondere wenn die Zellen 2 in das Tragelement 19 eingeklebt werden, entsteht dennoch eine recht tragfähige Struktur. Fig. 16 zeigt den Akkumulator 1h in Explosionsdarstellung, Fig. 17 in Schrägansicht und Fig. 18 in Seitenansicht.

Fig. 19 zeigt eine Variante eines erfindungsgemäßen Akkumulators 1i welcher dem in den Figuren 16 bis 18 dargestellten Akkumulator 1h sehr ähnlich ist. Im Unterschied dazu umfasst der Akkumulator 1i aber auch eine oben auf dem Akkumulator 1i angeordnete elektronische Schaltung 20, beispielsweise eine Zellüberwachungseinheit welche zum Beispiel für das Balancing der Zellen 2 zuständig ist.

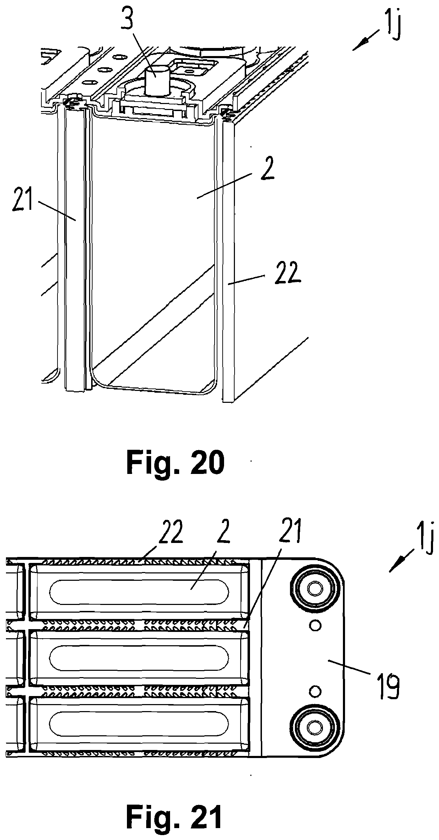

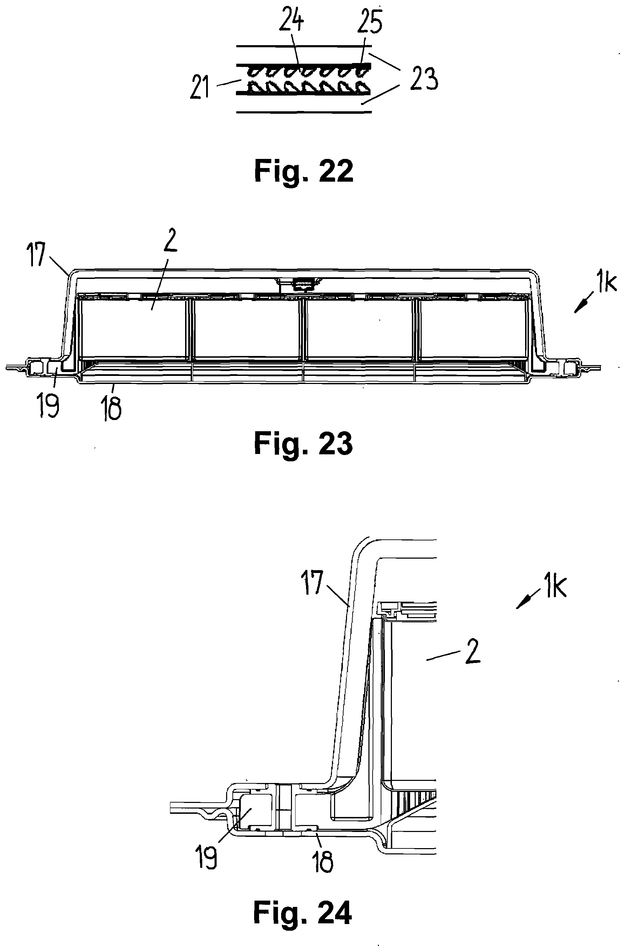

Die Figuren 20 bis 22 zeigen noch eine weitere Variante eines erfindungsgemäßen Akkumulators 1j, bei dem zumindest zwischen zwei spannungserzeugenden Zellen 2 ein plattenförmiges Zwischenelement 21 angeordnet ist, welches auf beiden Seiten elastische Rippen 24 aufweist. Am Rand einer Zelle 2 ist darüber hinaus ein plattenförmiges Zwischenelement 22 vorgesehen, welches auf der der Zelle 2 zugewandten Seite elastische Rippen 24 aufweist. Die Rippen liegen dabei an einer Zelle 2 an oder auch an einem I-förmigen oder H-förmigen Zwischenelemente 14 und ermöglichen wegen ihrer Elastizität einen Längenausgleich zwischen den Zellen 2. Zudem bildet eine Rille zwischen zwei Rippen 24 gemeinsam mit den Gehäuse 23 der Zelle 2 einen Kanal 25, welcher zur Führung eines gasförmigen oder flüssigen Wärmeträgers vorgesehen ist. Die Zwischenelemente 21 und 22 erfüllen damit einen Doppelnutzen. Die Zellen 2 sind samt den Zwischenelementen 21 und 22 in einem Tragelement 19 angeordnet. Fig. 20 zeigt den Akkumulator 1j in Schrägansicht, Fig. 21 in Draufsicht, und Fig. 22 zeigt die Bildung eines Kanals 25 in Detailansicht.

Die Figuren 23 bis 24 zeigen eine weitere Variante eines erfindungsgemäßen Akkumulators 1k, welcher dem in den Figuren 20 bis 22 gezeigten Akkumulator 1j sehr ähnlich ist. Im Unterschied dazu ist um den das Tragelement 19, die Zellen 2 sowie die Zwischenelemente 21 und 22 umfassenden Verbund eine obere Abdeckung 17 und eine untere Abdeckung 18 angeordnet. Die Abdeckungen 17 und 18 können natürlich auch eine Tragefunktion übernehmen,. Um ein Ausknicken bzw. Ausbeulen der vergleichsweise dünnen Abdeckungen 17 und 18 zu vermeiden, können diese auch mit Sicken und/oder Rippen versehen sein.

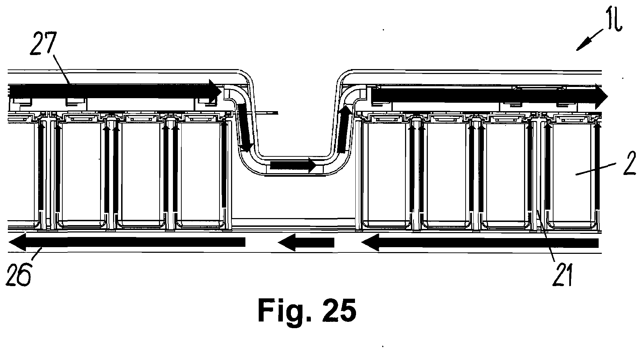

Fig. 25 zeigt schließlich noch eine weitere Variante eines erfindungsgemäßen Akkumulators 11, welcher eine bereits in Figur 20 gezeigte Anordnung von Zellen 2 und Zwischenelementen 21 und 22, sowie ein unteres Tragelement 26 und ein oberes Tragelement 27 umfasst. Beide Tragelemente 26 und 27 sind hohl und zur Führung eines gasförmigen oder flüssigen Wärmeträgers vorgesehen. Konkret fließt der Wärmeträger über das untere Tragelement 26 (bildet den Zulauf), die Kanäle 25 (siehe auch Fig. 22) und das obere Tragelement 27 (bildet den Ablauf). Da der Druck des Wärmeträgers entlang der Tragelemente 26 und 27 variiert, können zur Erreichung eines gleichmäßigen Durchflusses durch die Kanäle 25 unterschiedlich große Löcher in den Tragelementen 26 und 27, über welche der Wärmeträger zu oder von den Kanälen 25 fließt, vorgesehen werden. Selbstverständlich kann auch das obere Tragelement 27 als Zulauf und das untere Tragelement 26 als Ablauf vorgesehen werden.

Die in den Figuren 1 bis 25 gezeigten Akkumulatoren 1a..1l weisen also mehrere, in der gezeigten Lage des Akkumulators 1a..1d nebeneinander angeordnete, spannungserzeugende Zellen 2 auf. Die Akkumulatoren 1a..1l weisen zudem mehrere voneinander beabstandete Befestigungs-/Auflagepunkte auf, an welchen die Akkumulatoren 1a..1l befestigt sind oder aufliegen. Zumindest ein erster Teil der genannten Zellen 2 mit einer ersten Masse sowie optionale weitere Bestandteile des Akkumulators 1a..1l mit einer weiteren Masse kommen dabei zwischen den Befestigungs-/Auflagepunkten zu liegen.

Der erste Teil der Zellen 2 ist nun dazu vorbereitet, die zwischen den Befestigungs-/Auflagepunkten entstehenden Biege-/Scherbeanspruchung aufzunehmen. Diese Biege-/Scherbeanspruchung rührt beispielsweise aus der auf die erste Masse und die optionale weitere Masse wirkende Beschleunigung in vertikaler Richtung her, z.B. wenn der Akkumulator 1a..1l im Wesentlichen in horizontaler Lage eingebaut/gebraucht wird. Die genannte Biege-/Scherbeanspruchung kann aber auch aus der auf die erste Masse und die optionale weitere Masse wirkende Beschleunigung in horizontale Richtung herrühren, z.B. wenn der Akkumulator 1a..1l im Wesentlichen in vertikaler Lage eingebaut/gebraucht wird. Selbstverständlich sind auch Mischformen denkbar, etwa wenn der Akkumulator 1a..1l schräg eingebaut wird, beziehungsweise die Auflage-/Befestigungspunkte sowohl horizontal als auch vertikal voneinander beabstandet sind. Insbesondere ist auch denkbar, dass die vom Akkumulator 1a..1l gebildete Struktur zumindest abschnittsweise einen Kragträger bildet.

An dieser Stelle wird angemerkt, dass die in den Figuren 1 bis 25 dargestellten Akkumulatoren 1a..1l auch variiert, insbesondere miteinander kombiniert werden können.

Schließlich wird darauf hingewiesen, dass es sich bei den Figuren 1 bis 25 teilweise um stark vereinfachte Prinzipbilder handelt. In der Realität kann ein erfindungsgemäßer Akkumulator 1a..1l auch von der Darstellung abweichen, insbesondere zusätzliche hier nicht dargestellte Bauteile umfassen. Schließlich wird angemerkt, dass die Darstellungen nicht notwendigerweise maßstäblich sind und Proportionen von realen Bauteilen auch von den Proportionen der dargestellten Bauteile abweichen können.

## Patentansprüche

1. Akkumulator (1a..1l), umfassend:
- mehrere spannungserzeugende Zellen (2) mit Gehäuse,
- mehrere voneinander beabstandete Befestigungs-/Auflagepunkte, an welchen der Akkumulator (1a.. 1l) befestigt ist oder aufliegt, wobei zumindest ein erster Teil der genannten Zellen (2) mit einer ersten Masse sowie optionale weitere Bestandteile (4-10, 12-24, 26-27) des Akkumulators (1a..1l) mit einer weiteren Masse zwischen den Befestigungs-/Auflagepunkten zu liegen kommen,
und wobei
der erste Teil der Zellen (2) die gesamte zwischen den Befestigungs-/Auflagepunkten im Akkumulator (1a..1l) entstehenden Biege-/Scherbeanspruchung aufnimmt und
zumindest zwischen zwei spannungserzeugenden Zellen (2) zur elektrischen Verbindung der Zellen (2) sowie zur Kraftübertragung von einer Zelle (2) zur nächsten Zelle (2) und damit die Zellen zueinander in Position bleiben ein I-förmiges beziehungsweise H-förmiges Zwischenelement (14) angeordnet ist.

2. Akkumulator (1a..1l) nach Anspruch 1, **dadurch gekennzeichnet, dass** zumindest zwischen zwei spannungserzeugenden Zellen (2) ein plattenförmiges Zwischenelement (21) angeordnet ist, welches zumindest auf einer Seite elastische Rippen (24) aufweist.

3. Akkumulator (1a.. 1l) nach Anspruch 2, **dadurch gekennzeichnet, dass** die Rippen (24) an einer Zelle (2) anliegen und eine Rille zwischen zwei Rippen (24) gemeinsam mit der Zelle (2) einen Kanal (25) begrenzt, welcher zur Führung eines gasförmigen oder flüssigen Wärmeträgers vorgesehen ist.

4. Akkumulator (1a.. 1l) nach einem der Ansprüche 1 bis 3, **dadurch gekennzeichnet, dass** zumindest zwei spannungserzeugende Zellen (2) und zumindest ein Zwischenelement (7-10, 14, 21) miteinander verklebt sind.

5. Akkumulator (1a..1l) nach einem der Ansprüche 1 bis 4, **dadurch gekennzeichnet, dass** zumindest zwei spannungserzeugende Zellen (2) und zumindest ein Zwischenelement (7-10, 14, 21) miteinander verschraubt sind.

6. Akkumulator (1a..1l) nach einem der Ansprüche 1 bis 5, **dadurch gekennzeichnet, dass** zumindest zwei spannungserzeugende Zellen (2) und zumindest ein Zwischenelement (7-10, 14, 21) mit Hilfe von Zugbändern (5) oder Zugstangen, welche eine Druckvorspannung erzeugen, aneinander gedrückt werden.

## Claims

1. Battery (1a...1l), comprising:
- a plurality of voltage-generating cells (2) with a housing,
- a plurality of fastening/bearing points which are spaced apart from one another and at which the battery (1a...1l) is fastened or bears, wherein
at least a first portion of said cells (2) having a first mass and also optional further components (4-10, 12-24, 26-27) of the battery (1a...1l) having a further mass come to lie between the fastening/bearing points,
and wherein
the first portion of the cells (2) absorbs the entire bending/shear stress occurring between the fastening/bearing points in the battery (1a...1l), and
an I-shaped or H-shaped intermediate element (14) is arranged at least between two voltage-generating cells (2) for electrically connecting the cells (2) and for transmitting force from one cell (2) to the next cell (2) and thus the cells remain in position relative to one another.

2. Battery (1a...1l) according to claim 1, **characterized in that** a panel-shaped intermediate element (21) is arranged at least between two voltage-generating cells (2), which panel-shaped element has elastic ribs (24) at least on one side.

3. Battery (1a...1l) according to claim 2, **characterized in that** the ribs (24) bear against a cell (2) and a groove between two ribs (24) together with the cell (2) delimits a channel (25) which is provided for guiding a gaseous or liquid heat transfer medium.

4. Battery (1a...1l) according to any of claims 1 to 3, **characterized in that** at least two voltage-generating cells (2) and at least one intermediate element (7-10, 14, 21) are adhesively bonded to one another.

5. Battery (1a...1l) according to any of claims 1 to 4, **characterized in that** at least two voltage-generating cells (2) and at least one intermediate element (7-10, 14, 21) are screwed to one another.

6. Battery (1a...1l) according to any of claims 1 to 5, **characterized in that** at least two voltage-generating cells (2) and at least one intermediate element (7-10, 14, 21) are pressed against one another by means of tension straps (5) or tension rods which generate a compressive prestress.

## Revendications

1. Accumulateur (1a...1l), comprenant :
- plusieurs éléments générateurs de tension (2), présentant un boîtier,
- plusieurs points de fixation/d'appui espacés les uns des autres, au niveau desquels l'accumulateur (1a...1l) est fixé ou repose, au moins une première partie des éléments (2) cités présentant une première masse ainsi que d'éventuels autres composants (4-10, 12-24, 26-27) de l'accumulateur (1a...1l) présentant une autre masse venant se placer entre les points de fixation/d'appui,
et dans lequel
la première partie des éléments (2) absorbe l'intégralité de la contrainte de flexion/de cisaillement générée entre les points de fixation/d'appui dans l'accumulateur (1a...1l) et
un élément intermédiaire (14) en forme de I ou en forme de H est agencé au moins entre deux éléments générateurs de tension (2) pour la connexion électrique des éléments (2) ainsi que pour le transfert de force d'un élément (2) à l'élément (2) suivant et donc les éléments restent en position les uns par rapport aux autres.

2. Accumulateur (1a...1l) selon la revendication 1, **caractérisé en ce qu'**un élément intermédiaire (21) en forme de plaque, lequel présente des nervures élastiques (24) au moins sur une face, est agencé au moins entre deux éléments générateurs de tension (2).

3. Accumulateur (1a...1l) selon la revendication 2, **caractérisé en ce que** les nervures (24) s'appliquent contre un élément (2) et une rainure située entre deux nervures (24) délimite, conjointement avec l'élément (2), un canal (25) destiné à guider un agent caloporteur gazeux ou liquide.

4. Accumulateur (1a...1l) selon l'une quelconque des revendications 1 à 3, **caractérisé en ce qu'**au moins deux éléments générateurs de tension (2) et au moins un élément intermédiaire (7-10, 14, 21) sont collés ensemble.

5. Accumulateur (1a...1l) selon l'une quelconque des revendications 1 à 4, **caractérisé en ce qu'**au moins deux éléments générateurs de tension (2) et au moins un élément intermédiaire (7-10, 14, 21) sont vissés ensemble.

6. Accumulateur (1a...1l) selon l'une quelconque des revendications 1 à 5, **caractérisé en ce qu'**au moins deux éléments générateurs de tension (2) et au moins un élément intermédiaire (7-10, 14, 21) sont pressés les uns contre les autres à l'aide de bandes de traction (5) ou de barres de traction, lesquelles génèrent une précontrainte de compression.
